# EUROPEAN PATENT SPECIFICATION

(11) **EP 4 572 022 B1**
(45) Date of publication and mention of the grant of the patent: **09.09.2026**
(21) Application number: 24219125.2
(22) Date of filing: 11.12.2024
(51) Int. Cl.: H01R 4/44, H01R 4/26

(54) **CLAMP FOR CONDUCTORS**
KLEMME FÜR LEITER
PINCE POUR CONDUCTEURS

(30) Priority: 11.12.2023 US 202363608452 P
(43) Date of publication of application: 18.06.2025
(73) Proprietor: Erico International Corporation, Solon, OH 44139 (US)
(72) Inventor: Bendlak, Thomas E., Macedonia (US); Shibilia, David J., Cincinnati (US); Zwit, Andrew T., Cincinnati (US)
(74) Representative: Barker Brettell LLP

(56) References cited:
- DE-A1- 102018 102 298
- DE-A1- 102019 213 175
- FR-A- 1 025 428
- JP-Y1- S 525 258
- US-A- 2 044 679

## Description

### BACKGROUND

Clamps may be used to secure one or more conductors for grounding and bonding applications. For example, pipe clamps may be used in pipe or conduit bonding, fence post or gate bonding, raised floor pedestal bonding, underground reinforcement steel (e.g., rebar) bonding, or lightning protection systems. However, in some cases, traditional clamps may be unable to generate sufficient clamping force to retain the conductor (e.g., a wire, conduit, cable, etc.) within the clamp during use, which may result in a poor connection or bond between the clamp and the conductor. DE102019213175 A1 discloses a clamp with two plates to connect conductors.

### SUMMARY

The invention is directed to a clamp assembly for securing a conductor. The clamp assembly can include a clamp having a first plate having a first engagement surface that includes a first groove defining a first groove axis, a second plate having a second engagement surface that includes a second groove defining a second groove axis, and a fastener extending through the first plate and the second plate to adjustably reduce a spacing between the second plate and the first plate, to clamp a conductor between the first engagement surface and the second engagement surface with the conductor extending along the first groove and the second groove. The first protrusion can extend from the first groove to engage the conductor at a distal end of the first protrusion that protrudes outside of the first groove with an elongated width transverse to the first groove axis. A second protrusion can extend from the first groove to engage the conductor at a distal end of the second protrusion that protrudes outside of the first groove with an elongated width transverse to the first groove axis. And, a third protrusion can extend from the second groove to engage the conductor at a distal end of the third protrusion that protrudes outside of the second groove with an elongated width transverse to the second groove axis. The distal end of one or more of the first, second, or third protrusions can define a recessed channel oriented to receive the conductor.

Some aspects of the disclosure can provide the clamp assembly of any previous aspect in which the third protrusion is arranged between the first protrusion and the second protrusion relative to a direction along the first or second groove axis.

Some aspects of the disclosure can provide the clamp assembly of any previous aspect in which, in an installed configuration, the first protrusion and the second protrusion protrude to deform the conductor around the third protrusion.

Some aspects of the disclosure can provide the clamp assembly of any previous aspect in which the distal end of each of the second protrusion and the third protrusion, respectively, includes angled surfaces defining a V-shape of the recessed channel, oriented to contact the conductor.

Some aspects of the disclosure can provide the clamp assembly of any previous aspect in which the distal end of each of the first protrusion, the second protrusion, and the third protrusion, respectively, includes angled surfaces defining a V-shaped channel oriented to contact the conductor.

Some aspects of the disclosure can provide the clamp assembly of any previous aspect in which angled surfaces of the V-shaped channel at least partially surround an exterior of the conductor.

Some aspects of the disclosure can provide the clamp assembly of any previous aspect in which the second groove is included in a plurality of grooves on the second plate to selectively receive the conductor in cooperation with the first groove, the plurality of grooves further including a third groove substantially parallel to the second groove, a fourth groove substantially perpendicular to the first and third grooves, and a fifth groove substantially parallel to the fourth groove.

Some aspects of the disclosure can provide the clamp assembly of any previous aspect in which a protrusion extends, respectively, from each of the third, fourth, and fifth grooves, to a distal end that protrudes outside of the corresponding third, fourth, or fifth groove to engage the conductor.

Some aspects of the disclosure provide a method of installing a clamp assembly. The method can include aligning a conductor between a first groove of a first engagement surface of a first plate of the clamp, and a second groove of a second engagement surface of a second plate of the clamp, with a first protrusion and a second protrusion extending from the first groove toward the conductor and a third protrusion extending from the second groove toward the conductor, adjusting a fastener extending through the first plate and the second plate to reduce a spacing between the second plate and the first plate, to clamp the conductor between the first engagement surface and the second engagement surface with the conductor extending along the first groove and the second groove, and with the conductor engaged by a distal end of the first protrusion that extends outside of the first groove with an elongated width transverse to a first groove axis of the first groove, a distal end of the second protrusion that extends outside of the first groove with an elongated width transverse to the first groove axis, and a distal end of the third protrusion that extends outside of the second groove with an elongated width transverse to a second groove axis of the second groove. The distal end of one or more of the first, second, or third protrusions can define a recessed channel oriented to contact the conductor.

Some aspects of the disclosure can provide the method of any previous aspect in which adjusting the fastener deforms the conductor with the third protrusion between the first protrusion and the second protrusion.

Some aspects of the disclosure can provide the method of any previous aspect in which the conductor is deformed by a respective recessed channel on each of the first, second, and third protrusions.

Some aspects of the disclosure can provide the method of any previous aspect in which the recessed channel is defined by angled surfaces of the one or more of the first, second, or third protrusions, extending from a midpoint of the distal end along the elongate width, and in which the conductor is centered within relative to the first and second grooves by the angled surfaces to be secured between the first engagement surface and the second engagement surface.

Some aspects of the disclosure can provide the method of any previous aspect in which the angled surfaces of the recessed channel extend to opposing sides of the corresponding first or second groove axis to at least partially surround an exterior of the conductor.

Some aspects of the disclosure can provide the method of any previous aspect further including selectively aligning the conductor between the first groove of the first plate and one of a plurality of grooves on the second plate, the plurality of grooves including the second groove, a third groove substantially parallel to the second groove, a fourth groove substantially perpendicular to the first and third grooves, and a fifth groove substantially parallel to the fourth groove, and engaging the conductor via at least one protrusion that extends, respectively, from each of the third, fourth, and fifth grooves, to a distal end that protrudes outside of the corresponding third, fourth, or fifth groove to engage the conductor.

Some aspects of the disclosure can provide the method of any previous aspect further including selectively securing a pair of conductors within the clamp, with a first conductor arranged between the first groove of the first plate and the second groove of the second plate, and a second conductor arranged between a sixth groove of the first plate and the third groove of the second plate so that the conductors are arranged in parallel, on opposing sides of the fastener.

Some aspects of the disclosure provide a clamp assembly for securing a conductor including a first plate with a first groove having a first width transverse to a first groove axis and a first protrusion extending away from the first groove and forming a recessed channel disposed outside of the first groove. The clamp assembly can further include a second plate with a second groove having a second width transverse to a second groove axis and a pair of second protrusions extending away from the second groove, each second protrusion of the pair forming a recessed channel disposed outside of the second groove. **In** an installed configuration the first protrusion can be arranged between the pair of second protrusions relative to an elongate direction of the first and second grooves to deform the conductor around the first protrusion.

Some aspects of the disclosure can provide the clamp assembly of any previous aspect in which one or more of the recessed channels include angled surfaces that define a V-shaped channel that extends to opposite sides of the corresponding first or second groove axis.

Some aspects of the disclosure can provide the clamp assembly of any previous aspect in which the first protrusion defines a width that is wider than a width of the first groove.

Some aspects of the disclosure can provide the clamp assembly of any previous aspect in which the second groove is included in a plurality of grooves on the second plate to selectively receive the conductor in cooperation with the first groove, the plurality of grooves further including a third groove substantially parallel to the second groove, a fourth groove substantially perpendicular to the first and third grooves, and a fifth groove substantially parallel to the fourth groove.

Some aspects of the disclosure can provide the clamp assembly of any previous aspect in which a protrusion extends, respectively, from each of the third, fourth, and fifth grooves, to a distal end that protrudes outside of the corresponding third, fourth, or fifth groove to engage the conductor.

Features which are described in the context of separate aspects and/or embodiments of the invention may be used together and/or be interchangeable wherever possible. Similarly, where features are, for brevity, described in the context of a single embodiment, those features may also be provided separately or in any suitable sub- combination. Features described in connection with the clamp assembly may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 is an axonometric view of a clamp according to aspects of the present disclosure.
FIG. 2 is an exploded view of the clamp of FIG. 1.
FIG. 3 is a side view of a clamping assembly of the clamp of FIG. 1.
FIG. 4 is an axonometric view of a first plate of the clamp of FIG. 1.
FIG. 5 is a side view of the first plate of FIG. 4.
FIG. 6 is an axonometric view of a second plate of the clamp of FIG. 1.
FIG. 7 is a side view of the second plate of FIG. 6.
FIG. 8 is a side view of the clamp of FIG.1 including a conductor secured within the clamp.
FIG. 9 is a side view of another example of a clamp, that does not form part of the invention.
FIG. 10 is a side view of another example of a clamp, that does not form part of the invention.
FIG. 11 is a side view of another example of a clamp, that does not form part of the invention.

### DETAILED DESCRIPTION

The following discussion is presented to enable a person skilled in the art to make and use embodiments of the invention. Given the benefit of this disclosure, various modifications to the illustrated embodiments will be readily apparent to those skilled in the art, and the principles herein can be applied to other embodiments and applications without departing from embodiments of the invention. Thus, embodiments of the invention are not intended to be limited to embodiments shown, but are to be accorded the widest scope consistent with the principles and features disclosed herein.

The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

As generally noted above, it may be beneficial to increase the amount of force required to remove a conductor from within a clamp (e.g., a pipe clamp). Further, in grounding and bonding applications, it may be beneficial to maximize the connection strength between the clamp and the conductor (e.g., to avoid electrical shorts, etc.). **In** one example, a clamp (e.g., a pipe clamp) may include a clamping assembly configured to receive and retain one or more conductors (e.g., wire, conduit, cable, etc.). The clamping assembly may include a first plate and a second plate arranged opposite the first plate. **In** one example, the second plate may be adjusted relative to the first plate via an adjustable fastener to clamp the conductor between an engagement surface of the first plate and an engagement surface of the second plate.

**In** one example, the first plate may include one or more protrusions extending away from the engagement surface. The protrusions may be positioned within and extending out of one or more grooves (e.g., parallel grooves) defined by the engagement surface of the first plate or may otherwise protrude to engage conductors at location spaced apart from the relevant engagement surface. **In** one example, the protrusions may define a width that is substantially equal to a width of the grooves. **In** one example, the protrusions may have elongated widths transverse to a corresponding groove or conductor (i.e., may exhibit an aspect ratio with a larger dimension transverse to an axis of the groove or conductor than along the axis of the groove or conductor).

**In** one example, the first plate may include a single protrusion on each side of a clamping portion of the plate (e.g., four protrusions for four sides). **In** another example, the second plate may include one or more protrusions extending away from the engagement surface (e.g., to engage a conductor from an opposite direction than a protrusion from the first plate).

As noted above, the protrusions may be positioned within and extend out of one or more grooves defined by the engagement surface of the second plate. For example, the protrusions may define a width that is substantially equal to a width of the grooves on one or both plate. **In** one example, the second plate may include a pair of protrusions (e.g., one on each end of the groove). **In** one particular example, a protrusion of the first plate is oriented to approximately bisect a distance between a pair of protrusions of the second plate.

In one example, the protrusions (e.g., protrusions on first plate and second plate) may include a pair of angled surfaces forming a V-shaped channel configured to center and retain the conductor, or distal recessed channels to engage a conductor can exhibit other geometries (e.g., being U-shaped or otherwise smoothly curved, etc.). In another example, the protrusions may include a planar (e.g., flat) surface.

In use, the user may insert the conductor between the engagement surfaces of the first and second plates and then adjust (e.g., rotatably tighten) the adjustable fastener to drive the second plate towards the first plate until the protrusions of the first and second plates contact the conductor. Following this, the user may continue to adjust the adjustable fastener to drive the protrusions of the second plate into the conductor and thereby deform (e.g., crimp or otherwise bend) the conductor around the protrusion of the first plate. Thus, the clamp can increase the force required to remove the conductor from the clamp, without separating strands of the conductor, which may lead to decreased conductivity or a poor connection.

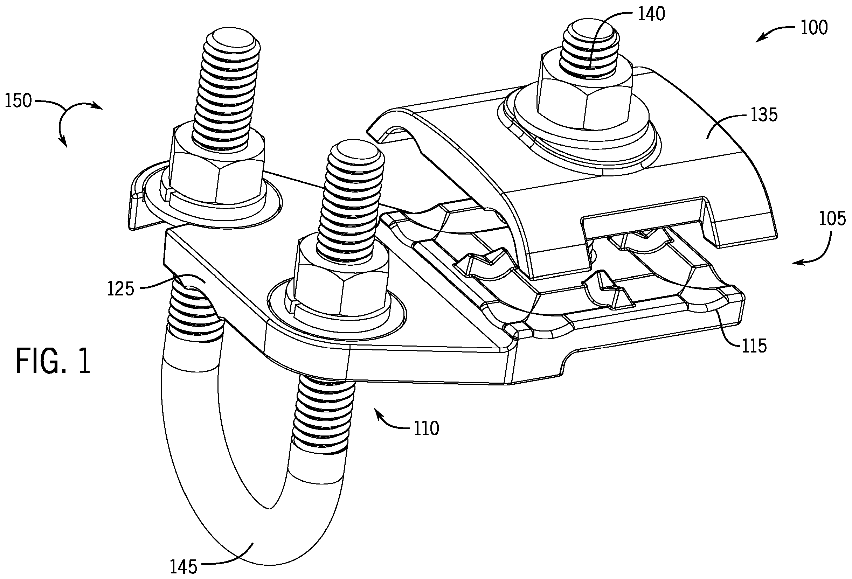

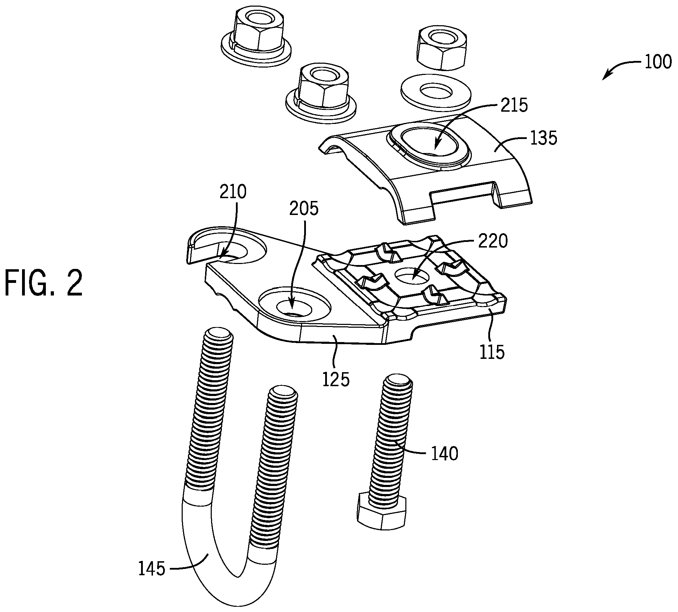

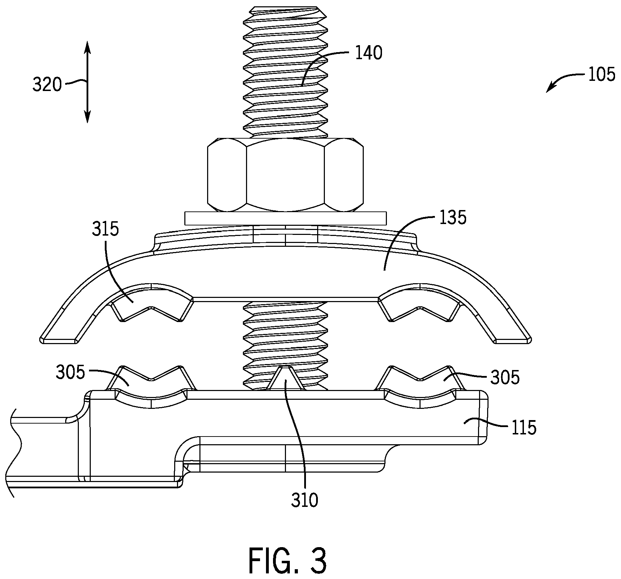

FIGS. 1-3 illustrate an example of a clamp 100 for retaining one or more electrical conductors (e.g., conduit, wire, cable, etc.). The clamp 100 may include a clamping assembly 105 configured to receive and retain the one or more electrical conductors. The clamp 100 may further include a mounting assembly 110 configured to secure the clamp 100 to a pipe, post, or other mounting location.

In one example, the clamp 100 may include a first plate 115 having a mounting bracket 125. The mounting bracket 125 may include an aperture 205 configured to receive a portion of a fastener 145 (e.g., a first leg of a U-bolt). Correspondingly, the mounting bracket 125 may include a cutout 210 configured to selectively receive another portion (e.g., a second leg of the U-bolt) of the fastener 145. In one particular example, the fastener 145 may be in the form of a U-bolt configured to permit a user to secure the clamp 100 to a pipe or other tubular mounting location. To facilitate ease of mounting of the clamp 100, the cutout 210 may permit rotational movement of the fastener 145 about a pivot axis formed by the fastener 145 through the aperture 205 as shown by arrow 150. Thus, a user does not have to remove the fastener 145 from the mounting bracket 125 in order to mount the clamp 100 to a desired mounting location. Instead, the user may loosen the fastener 145 and rotate the fastener 145 as shown by arrow 150. Then the user may arrange the fastener 145 around the desired mounting location and rotate the clamp 100 such that the fastener 145 is within the cutout 210. Following this, the user may tighten the fastener 145 to secure the clamp 100 to the mounting location.

As mentioned previously, the first plate 115 may work in combination with a second plate 135 to receive and retain one or more conductors (e.g., conduit, wire, cable, etc.) within the clamp 100. In one example, the first plate 115 and the second plate 135 may be tightened (e.g., moved nearer each other) or loosened (e.g., moved further from each other) as shown by arrow 320. For example, the first plate 115 and second plate 135 may be tightened or loosened via an adjustable fastener 140 arranged through both thru hole 215 defined by the second plate 135 and a corresponding thru hole 220 defined by the first plate 115. For example, during use, a user may arrange one or more conductors within the clamping assembly 105 of the clamp 100 (e.g., between the first plate 115 and the second plate 135) and then tighten the adjustable fastener 140 to bring the second plate 135 nearer to the first plate 115, thus tightening or clamping the one or more conductors within the clamp 100. Correspondingly, a user may loosen the adjustable fastener 140 to separate or move the second plate 135 further from the first plate 115, thus loosening or unclamping the one or more conductors from within the clamp 100.

To mitigate the risk of the one or more conductors separating from (e.g., becoming loose or unclamped from) the clamp 100. The first plate 115 and the second plate 135 may each include one or more protrusions configured to grip the one or more conductors. For example, the first plate 115 may include one or more protrusions 305, which may be arranged on opposing parallel sides of the first plate 115. Correspondingly, the first plate 115 may include one or more protrusions 310, which may be arranged on opposing parallel sides of the first plate 115, but perpendicular to the protrusions 305. Put differently, the protrusions 305 may be parallel to each other but perpendicular to the protrusions 310 and vice versa. In another example, the second plate 135 may include one or more protrusions 315 arranged on opposing parallel sides of the second plate 135. In one example, the second plate 135 may be rotatable about an axis formed by the adjustable fastener 140, such that the protrusions 315 of the second plate 135 may be arranged in various positions as desired by a user.

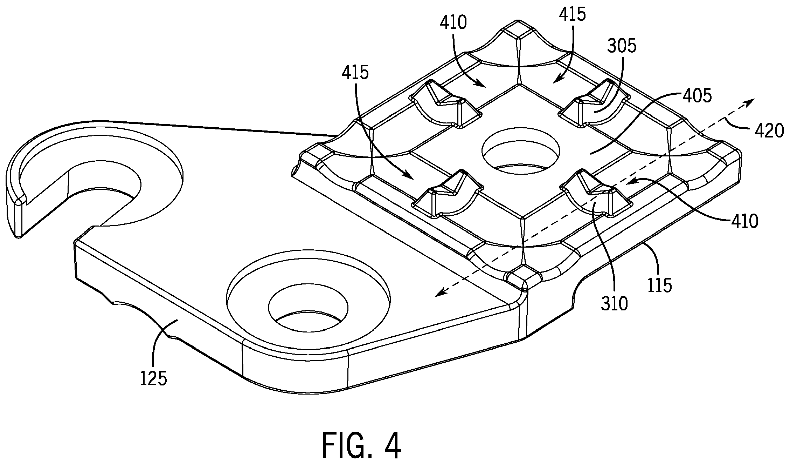

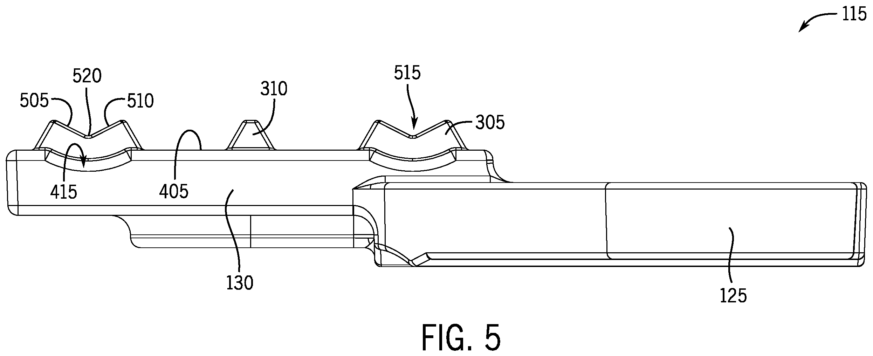

Looking now at FIGS. 4 and 5, the first plate 115 includes an engagement surface 405 defining a first pair of parallel grooves 410 and a second pair of parallel grooves 415. In some examples, the grooves 410, 415 may each include a groove axis, which may be defined along an elongate direction of the groove (e.g., as shown by arrow 420). Thus, when a conductor is arranged within the clamp, the conductor may be said to be arranged along the groove axis of the groove. In one example, the first and second pairs of parallel grooves 410, 415 may be arranged perpendicular to each other (e.g., forming a substantially rectangular shape). In one example, the protrusions 305 and the protrusions 310 may be arranged in about the center of the grooves. For example, the protrusions 305 may be arranged in about the center of the second pair of parallel grooves 415, while the protrusions 310 may be arranged in about the center of the first pair of parallel grooves 410. In another example, the protrusions 305 and the protrusions 310 may each define a width that is substantially equal to a width of the grooves 410, 415 and extends across (e.g., perpendicular to) the groove axis. In another example, the protrusions 305 and the protrusions 310 may each define a width that is greater than the width of the grooves 410, 415.

In one particular example, the protrusions 305 and the protrusions 310 may include a non-planar surface profile configured to center and retain the one or more conductors. For example, the protrusions 305 and the protrusions 310 may include a pair of angled surfaces 505, 510 together forming a V-shaped channel 515. In some examples, the angled surfaces 505, 510 may originate at an origin point 520 (e.g., the furthest recessed portion of the protrusions), which may be substantially aligned with a midpoint of the grooves. In one example, the channel 515 may be configured to center or align the conductors within the clamp 100. In another example, the channel 515 may be configured to cradle the one or more conductors when retained within the clamp 100 to prevent splaying or separation of one or more strands of the conductor (e.g., wire or cable conductors).

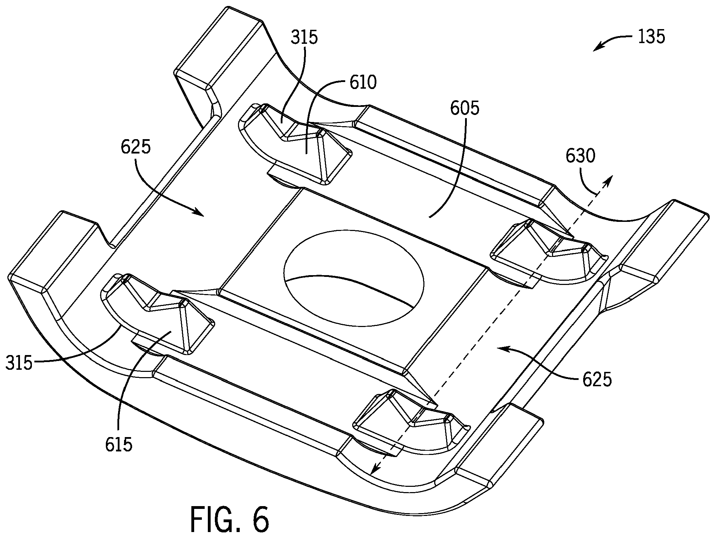

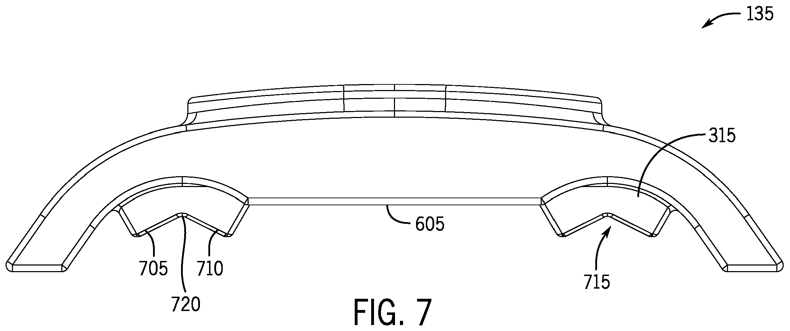

FIGS. 6 and 7 show one example of the second plate 135, which includes an engagement surface 605 defining a pair of parallel grooves 625. In some examples, the grooves 625 may each include a groove axis, which may be defined along an elongate direction of the groove (e.g., as shown by arrow 630). Thus, when a conductor is arranged within the clamp, the conductor may be said to be arranged along the groove axis of the groove. In one example, the protrusions 315 may be arranged at about the ends of the grooves 625. For example, the second plate 135 may include a pair of protrusions 315 arranged at either end of the grooves 625. For example, the second plate 135 may include a first protrusion 610 arranged at a first end of the grooves 625. Correspondingly, the second plate 135 may include a second protrusion 615 arranged at a second, opposite end of the grooves 625. Thus, in one example, when the second plate 135 is tightened down onto the first plate 115 (e.g., via the adjustable fastener 140) the first protrusion 610 and the second protrusion 615 may be arranged outside (e.g., straddling) the protrusions 305 or the protrusions 310 of the first plate 115. Thus, the protrusions 305 or the protrusions 310 may substantially bisect the first protrusion 610 from the second protrusion 615 when the second plate 135 is tightened down onto the first plate 115.

In some examples, the first protrusion 610 and the second protrusion 615 may each define a width that is substantially equal to a width of the grooves 625 (e.g., in a direction perpendicular to the groove axis). In another example, the protrusions 610, 615 may each define a width that is greater than the width of the grooves 625. Further, the first protrusion 610 and the second protrusion 615 may include a non-planar surface profile configured to center and retain the one or more conductors. For example, the first protrusion 610 and the second protrusion 615 may include a pair of angled surfaces 705, 710 together forming a V-shaped channel 715. In some examples, the angled surfaces 705,710 may originate at an origin point 720 (e.g., the furthest recessed portion of the protrusions), which may be substantially aligned with a midpoint of the grooves. In one example, the channel 715 may be configured to center or otherwise align the conductors relative to the relevant protrusion 315. In another example, the channel 715 may be configured to cradle the one or more conductors when retained within the clamp 100 to prevent splaying or separation of one or more strands of the conductor (e.g., wire or cable conductors).

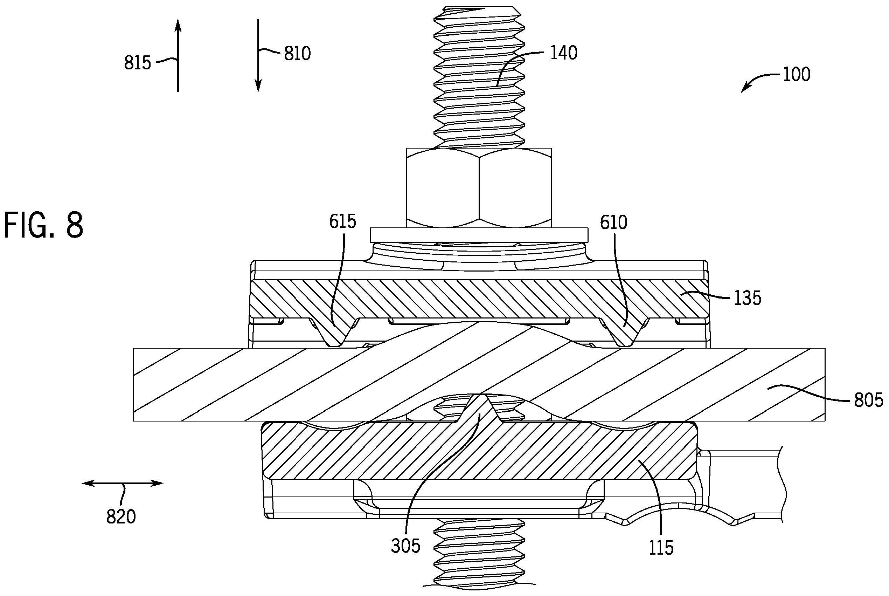

FIG. 8 shows an example of one or more conductors 805 secured within the clamp 100. As mentioned previously, the clamp 100 may be configured to secure more than one conductor simultaneously (e.g., via corresponding pairs of grooves). In one example, the conductors 805 may be arranged parallel to each other via corresponding grooves 410, 415. Additionally, depending on which pairs of grooves 410, 415 that a user decides to use on the first plate 115, the position of the second plate 135 may be adjusted (e.g., via rotation of the second plate 135) to align the first protrusion 610 and the second protrusion 615 with the conductor 805. Further, depending on which pairs of the grooves 410, 415 that a user decides to use on the first plate 115, the conductors 805 may be oriented parallel to or perpendicular to the fastener 145. In another example, a user may utilize only a single of the grooves 415 and only a single of the grooves 410 such that the conductors 805 may be oriented perpendicular to each other rather than parallel to each other.

In one example, the user may insert the conductor 805 within an opening defined between the engagement surfaces of the first plate 115 and the second plate 135 (e.g., when the first plate 115 and the second plate 135 are separated). For example, the user may insert the conductor 805 with the conductor 805 arranged or resting on the protrusions 305 (or the protrusions 310 depending on the desired orientation of the conductor 805). In one example, due to the channel 515 of the protrusions 305 or the protrusions 310, the conductor 805 may be automatically centered on the protrusions 305 or the protrusions 310.

Following this, the user may begin to drive the second plate 135 towards the first plate 115 (e.g., as shown by arrow 810) via the adjustable fastener 140. Once the first protrusion 610 and the second protrusion 615 of the second plate 135 contact the conductor 805, the channels 715 of the first protrusion 610 and the second protrusion 615 automatically center the conductor 805. As the user continues to tighten the adjustable fastener 140, the first protrusion 610 and the second protrusion 615 apply a force to the conductor 805 in the direction shown by arrow 810, while the protrusions 305 (or the protrusions 310) apply an opposing force to the conductor 805 in the direction shown by arrow 815. As a result, the conductor 805 deforms (e.g., bends) around the protrusions 305 (or the protrusions 310). In one example, deformation of the conductor 805 around the protrusions 305 increases the force required (e.g., force in the direction shown by arrow 820) to remove the conductor 805 from the clamp 100. Further, on larger diameter conductors, the angled surfaces 705, 710 of the protrusions 315 and the angled surfaces 505, 510 of the protrusions 305 or protrusions 310 may dig into the conductor 805 to further retain the conductor 805, without separating the strands of the conductor 805. Thus, the clamp 100 is able to meet or exceed current Underwriters Laboratories (UL) standards.

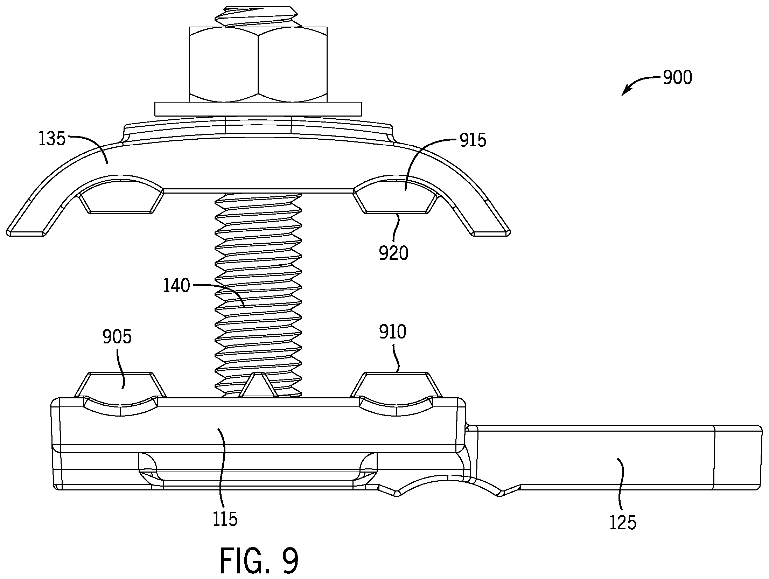

FIG. 9 illustrates another example of a clamp 900, that does not form part of the invention. As will be recognized, the clamp 900 shares a number of components in common with and operates in a similar fashion to the examples illustrated and described previously (e.g., the clamp 100). For the sake of brevity, these common features will not be again described below in detail. Rather, previous discussion of commonly named or numbered features, unless otherwise indicated, also applies to example configurations of the clamp 900.

In one example, the first plate 115 of the clamp 900 may include protrusions 905 having a planar (e.g., flat) surface 910. Correspondingly, the second plate 135 of the clamp 900 may include protrusions 915 having a planar surface 920. In one example, the planar surface 910 and the planar surface 920 of the protrusions 905 and the protrusions 915 may be configured to increase force transfer between the protrusions 905 and the protrusions 915 and the conductor 805 to deform the conductor 805 during a clamping operation.

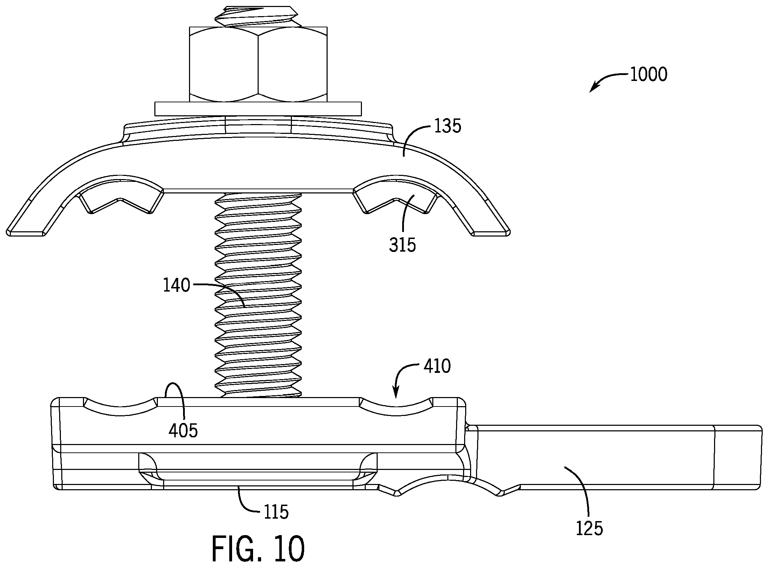

FIG. 10 illustrates another example of a clamp 1000, 900, that does not form part of the invention. As will be recognized, the clamp 100 shares a number of components in common with and operates in a similar fashion to the examples illustrated and described previously (e.g., the clamp 100, the clamp 900). For the sake of brevity, these common features will not be again described below in detail. Rather, previous discussion of commonly named or numbered features, unless otherwise indicated, also applies to example configurations of the clamp 1000.

In one example, the first plate 115 of the clamp 1000 may include only the grooves 410 (and the grooves 415) instead of the protrusions 305, 310, or protrusions 905 described previously. However, the second plate 135 of the clamp 100 may include the protrusions 315 as described previously (e.g., including the V-shaped channel). Thus, when the conductor 805 is inserted and clamped within the clamp 1000, the conductor 805 is not deformed as described previously. Instead, the protrusions 315 of the second plate 135 clamp the conductor 805 between the surface of the grooves 410 (or grooves 415) and the channel 715 of the protrusions 315 to retain the conductor 805 within the clamp 1000.

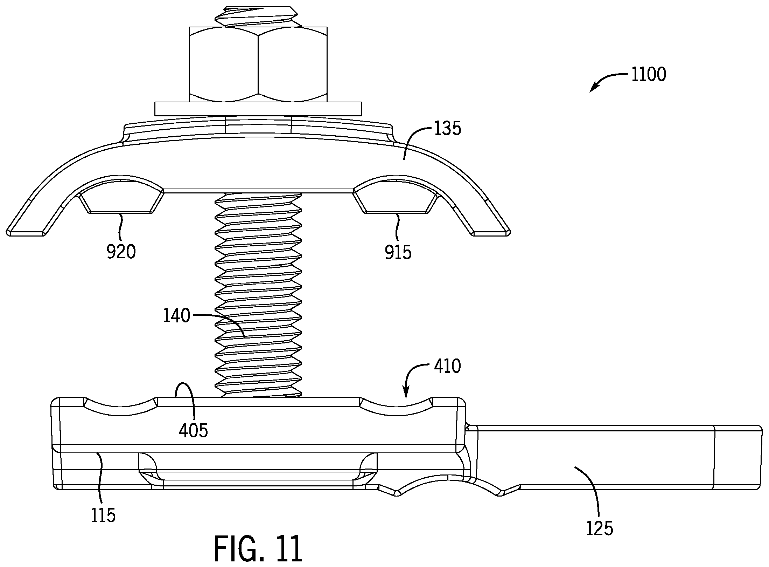

FIG. 11 illustrates another example of a clamp 1100; 900, that does not form part of the invention. As will be recognized, the clamp 1100 shares a number of components in common with and operates in a similar fashion to the examples illustrated and described previously (e.g., the clamp 100, the clamp 900, the clamp 1000). For the sake of brevity, these common features will not be again described below in detail. Rather, previous discussion of commonly named or numbered features, unless otherwise indicated, also applies to example configurations of the clamp 1100.

In one example, the first plate 115 of the clamp 1100 may include only the grooves 410 (and the grooves 415) instead of the protrusions 305, 310, or protrusions 905 described previously. However, the second plate 135 of the clamp 100 may include the protrusions 915 as described previously (e.g., including the planar surface). Thus, when the conductor 805 is inserted and clamped within the clamp 1100, the conductor 805 is not deformed as described previously. Instead, the protrusions 915 of the second plate 135 clamp the conductor 805 between the surface of the grooves 410 (or grooves 415) and the planar surface 920 of the protrusions 915 to retain the conductor 805 within the clamp 1000.

As should be appreciated, any of the above-described versions of the second plate 135 may be used with any of the above-described versions of the first plate 115. For example, the first plate 115 having the protrusions 905 with the planar surface 910 may be combined with the second plate 135 having the protrusions 315 with the V-shaped channel 715 and vice versa.

In some implementations, devices or systems disclosed herein can be utilized, manufactured, or installed using methods embodying aspects of the invention. Correspondingly, any description herein of particular features, capabilities, or intended purposes of a device or system is generally intended to include disclosure of a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as embodiments of the invention, of the utilized features and implemented capabilities of such device or system.

Also as used herein, unless otherwise limited or defined, "or" indicates a non-exclusive list of components or operations that can be present in any variety of combinations, rather than an **exclusive** list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

As used herein, unless otherwise defined or limited, directional terms are used for convenience of reference for discussion of particular figures or examples. For example, references to downward (or other) directions or top (or other) positions may be used to discuss aspects of a particular example or figure, but do not necessarily require similar orientation or geometry in all installations or configurations.

Also as used herein, unless otherwise limited or defined, "substantially parallel" indicates a direction that is within ± 12 degrees of a reference direction (e.g., within ± 6 degrees), inclusive.

Also as used herein, unless otherwise limited or defined, "substantially perpendicular" indicates a direction that is within ± 12 degrees of perpendicular a reference direction (e.g., within ± 6 degrees), inclusive.

Also as used herein, unless otherwise limited or defined, "integral" and derivatives thereof (e.g., "integrally") describe elements that are manufactured as a single piece without fasteners, adhesive, or the like to secure separate components together. For example, an element stamped, cast, or otherwise molded as a single-piece component from a single piece of sheet metal or using a single mold, without rivets, screws, or adhesive to hold separately formed pieces together is an integral (and integrally formed) element. In contrast, an element formed from multiple pieces that are separately formed initially then later connected together, is not an integral (or integrally formed) element.

Additionally, unless otherwise specified or limited, the terms "about" and "approximately," as used herein with respect to a reference value, refer to variations from the reference value of ± 25% or less, inclusive of the endpoints of the range. Similarly, the term "substantially equal" (and the like) as used herein with respect to a reference value refers to variations from the reference value of less than ± 15%, inclusive. Where specified, "substantially" can indicate in particular a variation in one numerical direction relative to a reference value. For example, "substantially less" than a reference value (and the like) indicates a value that is reduced from the reference value by 15% or more, and "substantially more" than a reference value (and the like) indicates a value that is increased from the reference value by 15% or more.

Also as used herein, unless otherwise limited or specified, "substantially identical" refers to two or more components or systems that are manufactured or used according to the same process and specification, with variation between the components or systems that are within the limitations of acceptable tolerances for the relevant process and specification. For example, two components can be considered to be substantially identical if the components are manufactured according to the same standardized manufacturing steps, with the same materials, and within the same acceptable dimensional tolerances (e.g., as specified for a particular process or product).

The previous description of the disclosed embodiments is provided to enable any person skilled in the art to make or use the invention. The invention is not intended to be limited to the embodiments shown herein but is to be accorded the widest scope within the scope of the claims.

## Claims

1. A clamp assembly for securing a conductor, the clamp assembly comprising:
a first plate (115), including:
a first groove (410) having a first width transverse to a first groove axis (420); and
a first protrusion (310) extending away from the first groove, the first protrusion forming
a recessed channel (515) disposed outside of the first groove; and
a second plate (135), including:
a second groove (625) having a second width transverse to a second groove axis (630); and
a pair of second protrusions (315) extending away from the second groove, each second
protrusion of the pair forming, respectively, a recessed channel (715) disposed outside of the second groove;
with the clamp assembly in an installed configuration that clamps a conductor (805) having a least the first width or the second width, the first protrusion (310) being arranged between the pair of second protrusions (315) relative to an elongate direction of the first and second grooves to deform the conductor around the first protrusion.

2. The clamp of claim 1, wherein one or more of the recessed channels :(515, 715) include angled surfaces (505, 510, 705, 710) that define a V-shaped channel that extends to opposite sides of the corresponding first or second groove axis (420, 630).

3. The clamp of claim 1, wherein the first protrusion (310) defines a width that is wider than a width of the first groove (410).

4. The clamp assembly of claim 1, wherein the second groove (625)
is included in a plurality of grooves on the second plate to selectively receive the conductor in cooperation with the first groove, the plurality of grooves further including:
a third groove substantially parallel to the second groove;
a fourth groove substantially perpendicular to the first and third grooves; and
a fifth groove substantially parallel to the fourth groove.

5. The clamp assembly of claim 4, wherein a protrusion (315) extends, respectively, from each of the third, fourth, and fifth grooves, to a distal end that protrudes outside of the corresponding third, fourth, or fifth groove to engage the conductor.

6. The clamp assembly of claim 2, wherein angled surfaces (505, 510, 705, 710) of the V-shaped channel at least partially surround an exterior of the conductor.

7. The clamp assembly of claim 1, further comprising: a fastener (140) extending through the first plate (115) and the second plate (135) to adjustably reduce a spacing between the second plate and the first plate, to clamp a conductor between the first plate and the second plate with the conductor (805) extending along the first groove (410) and the second groove (625).

8. A method of installing a clamp assembly, the method comprising:
aligning a conductor (805) between a first groove (410) of a first engagement surface of a first plate (115) of the clamp, and a second groove (625) of a second engagement surface of a second plate (135) of the clamp, with a first protrusion and a second protrusion extending from the first groove toward the conductor and a third protrusion extending from the second groove toward the conductor;
adjusting a fastener (140) extending through the first plate and the second plate to reduce a spacing between the second plate and the first plate, to clamp the conductor between the first engagement surface and the second engagement surface with the conductor extending along the first groove and the second groove, and with the conductor engaged by:
a distal end of the first protrusion that extends outside of the first groove with an elongated width transverse to a first groove axis of the first groove;
a distal end of the second protrusion that extends outside of the first groove with an elongated width transverse to the first groove axis; and
a distal end of the third protrusion that extends outside of the second groove with an elongated width transverse to a second groove axis of the second groove;
the distal end of one or more of the first, second, or third protrusions defining a recessed channel oriented to contact the conductor.

9. The method of claim 8, wherein adjusting the fastener (140) deforms the conductor (805) with the third protrusion between the first protrusion and the second protrusion.

10. The method of claim 9, wherein the conductor is deformed by a respective recessed channel (515, 715) on each of the first, second, and third protrusions.

11. The method of claim 8, wherein the recessed channel is defined by angled surfaces (505, 510, 705, 710) of the
one or more of the first, second, or third protrusions, extending from a midpoint of the distal end along the elongate width; and
wherein the conductor (805) is centered within relative to the first and second grooves by the angled surfaces to be secured between the first engagement surface and the second engagement surface.

12. The method of claim 11, wherein the angled surfaces of the recessed channel (515, 715) extend to
opposing sides of the corresponding first or second groove axis to at least partially surround an exterior of the conductor.

13. The method of claim 8, further comprising:
selectively aligning the conductor between the first groove (410) of the first plate (115) and one of a plurality of grooves on the second plate (135),
the plurality of grooves including:
the second groove;
a third groove substantially parallel to the second groove;
a fourth groove substantially perpendicular to the first and third grooves; and
a fifth groove substantially parallel to the fourth groove; and
engaging the conductor via at least one protrusion that extends, respectively, from each of the third, fourth, and fifth grooves, to a distal end that protrudes outside of the corresponding third, fourth, or fifth groove to engage the conductor.

14. The method of claim 13, further comprising:
selectively securing a pair of conductors (805) within the clamp, with a first conductor arranged between the first groove (410) of the first plate and the second groove (625) of the second plate, and a second conductor arranged between a sixth groove of the first plate and the third groove of the second plate so that the conductors are arranged in parallel, on opposing sides of the fastener.

15. The method of claim 8, wherein the first protrusion defines a width that is wider than a width of the first groove (410).

## Patentansprüche

1. Klemmanordnung zum Sichern eines Leiters, wobei die Klemmanordnung Folgendes umfasst:
eine erste Platte (115), die Folgendes beinhaltet:
eine erste Nut (410), die eine erste Breite quer zu einer ersten Nutachse (420) aufweist; und
einen ersten Vorsprung (310), der sich von der ersten Nut weg erstreckt, wobei der erste Vorsprung einen vertieften Kanal (515) bildet, der außerhalb der ersten Nut angeordnet ist; und
eine zweite Platte (135), die Folgendes beinhaltet:
eine zweite Nut (625), die eine zweite Breite quer zu einer zweiten Nutachse (630) aufweist; und
ein Paar von zweiten Vorsprüngen (315), die sich von der zweiten Nut weg erstrecken, wobei jeder zweite Vorsprung des Paars jeweils einen vertieften Kanal (715) bildet, der außerhalb der zweiten Nut angeordnet ist;
wobei die Klemmanordnung in einer installierten Konfiguration ist, die einen Leiter (805) festklemmt, der mindestens die erste Breite oder die zweite Breite aufweist, wobei der erste Vorsprung (310) zwischen dem Paar von zweiten Vorsprüngen (315) relativ zu einer Längsrichtung der ersten und der zweiten Nut angeordnet ist, um den Leiter um den ersten Vorsprung zu verformen.

2. Klemme nach Anspruch 1, wobei einer oder mehrere der vertieften Kanäle (515, 715) abgewinkelte Flächen (505, 510, 705, 710) beinhalten, die einen V-förmigen Kanal definieren, der sich zu gegenüberliegenden Seiten der entsprechenden ersten oder zweiten Nutachse (420, 630) erstreckt.

3. Klemme nach Anspruch 1, wobei der erste Vorsprung (310) eine Breite definiert, die breiter als eine Breite der ersten Nut (410) ist.

4. Klemmanordnung nach Anspruch 1, wobei die zweite Nut (625) in einer Vielzahl von Nuten an der zweiten Platte beinhaltet ist, um den Leiter selektiv in Zusammenarbeit mit der ersten Nut aufzunehmen, wobei die Vielzahl von Nuten ferner Folgendes beinhaltet:
eine dritte Nut, die im Wesentlichen parallel zu der zweiten Nut ist;
eine vierte Nut, die im Wesentlichen senkrecht zu der ersten und der dritten Nut ist; und
eine fünfte Nut, die im Wesentlichen parallel zu der vierten Nut ist.

5. Klemmanordnung nach Anspruch 4, wobei sich ein Vorsprung (315) jeweils von jeder der dritten, der vierten und der fünften Nut zu einem distalen Ende erstreckt, das außerhalb der entsprechenden dritten, vierten oder fünften Nut hervorsteht, um den Leiter in Eingriff zu nehmen.

6. Klemmanordnung nach Anspruch 2, wobei abgewinkelte Flächen (505, 510, 705, 710) des V-förmigen Kanals mindestens teilweise eine Außenseite des Leiters umgeben.

7. Klemmanordnung nach Anspruch 1, ferner umfassend:
ein Befestigungselement (140), das sich durch die erste Platte (115) und die zweite Platte (135) erstreckt, um einen Abstand zwischen der zweiten Platte und der ersten Platte einstellbar zu reduzieren, um einen Leiter zwischen der ersten Platte und der zweiten Platte festzuklemmen, wobei sich der Leiter (805) entlang der ersten Nut (410) und der zweiten Nut (625) erstreckt.

8. Verfahren zum Installieren einer Klemmanordnung, wobei das Verfahren Folgendes umfasst:
Ausrichten eines Leiters (805) zwischen einer ersten Nut (410) einer ersten Eingriffsfläche einer ersten Platte (115) der Klemme und einer zweiten Nut (625) einer zweiten Eingriffsfläche einer zweiten Platte (135) der Klemme mit einem ersten Vorsprung und einem zweiten Vorsprung, der sich von der ersten Nut in Richtung des Leiters erstreckt, und einem dritten Vorsprung, der sich von der zweiten Nut in Richtung des Leiters erstreckt;
Einstellen eines Befestigungselements (140), das sich durch die erste Platte und die zweite Platte erstreckt, um einen Abstand zwischen der zweiten Platte und der ersten Platte zu reduzieren, um den Leiter zwischen der ersten Eingriffsfläche und der zweiten Eingriffsfläche mit dem Leiter, der sich entlang der ersten Nut und der zweiten Nut erstreckt, und mit dem Leiter, der durch Folgendes in Eingriff steht, festzuklemmen:
ein distales Ende des ersten Vorsprungs, das sich außerhalb der ersten Nut mit einer länglichen Breite quer zu einer ersten Nutachse der ersten Nut erstreckt;
ein distales Ende des zweiten Vorsprungs, das sich außerhalb der ersten Nut mit einer länglichen Breite quer zu der ersten Nutachse erstreckt; und
ein distales Ende des dritten Vorsprungs, das sich außerhalb der zweiten Nut mit einer länglichen Breite quer zu einer zweiten Nutachse der zweiten Nut erstreckt;
wobei das distale Ende eines oder mehrerer des ersten, des zweiten oder des dritten Vorsprungs einen vertieften Kanal definiert, der dazu ausgerichtet ist, den Leiter zu berühren.

9. Verfahren nach Anspruch 8, wobei das Einstellen des Befestigungselements (140) den Leiter (805) mit dem dritten Vorsprung zwischen dem ersten Vorsprung und dem zweiten Vorsprung verformt.

10. Verfahren nach Anspruch 9, wobei der Leiter durch einen jeweiligen vertieften Kanal (515, 715) an jedem des ersten, des zweiten und des dritten Vorsprungs verformt wird.

11. Verfahren nach Anspruch 8, wobei der vertiefte Kanal durch abgewinkelte Flächen (505, 510, 705, 710) des einen oder der mehreren des ersten, des zweiten oder des dritten Vorsprungs definiert ist, die sich von einem Mittelpunkt des distalen Endes entlang der länglichen Breite erstrecken; und
wobei der Leiter (805) innerhalb relativ zu der ersten und der zweiten Nut durch die abgewinkelten Flächen zentriert ist, die zwischen der ersten Eingriffsfläche und der zweiten Eingriffsfläche zu sichern sind.

12. Verfahren nach Anspruch 11, wobei sich die abgewinkelten Flächen des vertieften Kanals (515, 715) zu gegenüberliegenden Seiten der entsprechenden ersten oder zweiten Nutachse erstrecken, um mindestens teilweise eine Außenseite des Leiters zu umgeben.

13. Verfahren nach Anspruch 8, ferner umfassend:
selektives Ausrichten des Leiters zwischen der ersten Nut (410) der ersten Platte (115) und einer von einer Vielzahl von Nuten auf der zweiten Platte (135), wobei die Vielzahl von Nuten Folgendes beinhaltet:
die zweite Nut;
eine dritte Nut, die im Wesentlichen parallel zu der zweiten Nut ist;
eine vierte Nut, die im Wesentlichen senkrecht zu der ersten und der dritten Nut ist; und
eine fünfte Nut, die im Wesentlichen parallel zu der vierten Nut ist; und
Ineingriffnehmen des Leiters über mindestens einen Vorsprung, der sich jeweils von jeder der dritten, der vierten und der fünften Nut erstreckt, zu einem distalen Ende, das außerhalb der entsprechenden dritten, vierten oder fünften Nut hervorsteht, um den Leiter in Eingriff zu nehmen.

14. Verfahren nach Anspruch 13, ferner umfassend:
selektives Sichern eines Paars von Leitern (805) innerhalb der Klemme, wobei ein erster Leiter zwischen der ersten Nut (410) der ersten Platte und der zweiten Nut (625) der zweiten Platte angeordnet ist und ein zweiter Leiter zwischen einer sechsten Nut der ersten Platte und der dritten Nut der zweiten Platte angeordnet ist, sodass die Leiter parallel auf gegenüberliegenden Seiten des Befestigungselements angeordnet sind.

15. Verfahren nach Anspruch 8, wobei der erste Vorsprung eine Breite definiert, die breiter als eine Breite der ersten Nut (410) ist.

## Revendications

1. Ensemble pince pour fixer un conducteur, l'ensemble pince comprenant :
une première plaque (115), incluant :
une première rainure (410) ayant une première largeur transversale par rapport à un axe de première rainure (420) ; et
une première saillie (310) s'étendant en éloignement de la première rainure, la première saillie formant un canal évidé (515) disposé à l'extérieur de la première rainure ; et
une seconde plaque (135), incluant :
une deuxième rainure (625) ayant une seconde largeur transversale par rapport à un axe de deuxième rainure (630) ; et
une paire de deuxièmes saillies (315) s'étendant en éloignement de la deuxième rainure, chaque deuxième saillie de la paire formant, respectivement, un canal évidé (715) disposé à l'extérieur de la deuxième rainure ;
l'ensemble pince étant dans une configuration installée serrant un conducteur (805) ayant au moins la première largeur ou la seconde largeur, la première saillie (310) étant agencée entre la paire de deuxièmes saillies (315) par rapport à une direction longitudinale des première et deuxième rainures pour déformer le conducteur autour de la première saillie.

2. Ensemble pince selon la revendication 1, dans lequel un ou plusieurs éléments parmi les canaux évidés (515, 715) incluent des surfaces inclinées (505, 510, 705, 710) qui définissent un canal en forme de V qui s'étend jusqu'à des côtés opposés de l'axe de première ou deuxième rainure (420, 630) correspondant.

3. Ensemble pince selon la revendication 1, dans lequel la première saillie (310) définit une largeur supérieure à une largeur de la première rainure (410).

4. Ensemble pince selon la revendication 1, dans lequel la deuxième rainure (625) est incluse dans une pluralité de rainures sur la seconde plaque pour recevoir sélectivement le conducteur en coopération avec la première rainure, la pluralité de rainures incluant en outre :
une troisième rainure sensiblement parallèle à la deuxième rainure ;
une quatrième rainure sensiblement perpendiculaire aux première et troisième rainures ; et
une cinquième rainure sensiblement parallèle à la quatrième rainure.

5. Ensemble pince selon la revendication 4, dans lequel une saillie (315) s'étend, respectivement, depuis chacune des troisième, quatrième et cinquième rainures, jusqu'à une extrémité distale qui fait saillie à l'extérieur de la troisième, quatrième ou cinquième rainure correspondante pour venir en prise avec le conducteur.

6. Ensemble pince selon la revendication 2, dans lequel des surfaces inclinées (505, 510, 705, 710) du canal en forme de V entourent au moins partiellement un extérieur du conducteur.

7. Ensemble pince selon la revendication 1, comprenant en outre :
une fixation (140) s'étendant à travers la première plaque (115) et la seconde plaque (135) pour réduire de façon ajustable un espacement entre la seconde plaque et la première plaque, afin de serrer un conducteur entre la première plaque et la seconde plaque, le conducteur (805) s'étendant le long de la première rainure (410) et de la deuxième rainure (625).

8. Procédé d'installation d'un ensemble pince, le procédé comprenant :
l'alignement d'un conducteur (805) entre une première rainure (410) d'une première surface de mise en prise d'une première plaque (115) de la pince, et une deuxième rainure (625) d'une seconde surface de mise en prise d'une seconde plaque (135) de la pince, avec une première saillie et une deuxième saillie s'étendant depuis la première rainure vers le conducteur et une troisième saillie s'étendant depuis la deuxième rainure vers le conducteur ;
l'ajustement d'une fixation (140) s'étendant à travers la première plaque et la seconde plaque pour réduire un espacement entre la seconde plaque et la première plaque, afin de serrer le conducteur entre la première surface de mise en prise et la seconde surface de mise en prise, le conducteur s'étendant le long de la première rainure et de la deuxième rainure, et le conducteur étant mis en prise par :
une extrémité distale de la première saillie qui s'étend à l'extérieur de la première rainure avec une largeur allongée transversale par rapport à un axe de première rainure de la première rainure ;
une extrémité distale de la deuxième saillie qui s'étend à l'extérieur de la première rainure avec une largeur allongée transversale par rapport à l'axe de première rainure ; et
une extrémité distale de la troisième saillie qui s'étend à l'extérieur de la deuxième rainure avec une largeur allongée transversale par rapport à un axe de deuxième rainure de la deuxième rainure ;
l'extrémité distale d'un ou plusieurs éléments parmi les première, deuxième ou troisième saillies définissant un canal évidé orienté pour venir en contact avec le conducteur.

9. Procédé selon la revendication 8, dans lequel l'ajustement de la fixation (140) déforme le conducteur (805) au moyen de la troisième saillie entre la première saillie et la deuxième saillie.

10. Procédé selon la revendication 9, dans lequel le conducteur est déformé par un canal évidé (515, 715) respectif sur chacune des première, deuxième et troisième saillies.

11. Procédé selon la revendication 8, dans lequel le canal évidé est défini par des surfaces inclinées (505, 510, 705, 710) des un ou plusieurs éléments parmi les première, deuxième ou troisième saillies, s'étendant depuis un point médian de l'extrémité distale le long de la largeur allongée ; et
dans lequel le conducteur (805) est centré à l'intérieur, par rapport aux première et deuxième rainures, par les surfaces inclinées pour être fixé entre la première surface de mise en prise et la seconde surface de mise en prise.

12. Procédé selon la revendication 11, dans lequel les surfaces inclinées du canal évidé (515, 715) s'étendent jusqu'à des côtés opposés de l'axe de première ou deuxième rainure correspondant pour entourer au moins partiellement un extérieur du conducteur.

13. Procédé selon la revendication 8, comprenant en outre :
l'alignement sélectif du conducteur entre la première rainure (410) de la première plaque (115) et un élément d'une pluralité de rainures sur la seconde plaque (135), la pluralité de rainures incluant :
la deuxième rainure ;
une troisième rainure sensiblement parallèle à la deuxième rainure ;
une quatrième rainure sensiblement perpendiculaire aux première et troisième rainures ; et
une cinquième rainure sensiblement parallèle à la quatrième rainure ; et
la mise en prise du conducteur par l'intermédiaire d'au moins une saillie qui s'étend, respectivement, depuis chacune des troisième, quatrième et cinquième rainures, jusqu'à une extrémité distale qui fait saillie à l'extérieur de la troisième, quatrième ou cinquième rainure correspondante pour venir en prise avec le conducteur.

14. Procédé selon la revendication 13, comprenant en outre :
la fixation sélective d'une paire de conducteurs (805) à l'intérieur de la pince, avec un premier conducteur agencé entre la première rainure (410) de la première plaque et la deuxième rainure (625) de la seconde plaque, et un second conducteur agencé entre une sixième rainure de la première plaque et la troisième rainure de la seconde plaque de sorte que les conducteurs sont agencés en parallèle, sur des côtés opposés de la fixation.

15. Procédé selon la revendication 8, dans lequel la première saillie définit une largeur supérieure à une largeur de la première rainure (410).
